# EUROPEAN PATENT APPLICATION

(11) **EP 4 339 581 A1**
(43) Date of publication of application: **20.03.2024**
(21) Application number: 23177111.4
(22) Date of filing: 02.06.2023
(51) Int. Cl.: G01M 17/007

(54) **SYSTEM AND METHOD FOR AUTOMATED VISUAL INSPECTION OF AN UNDERCARRIAGE OF A VEHICLE SUCH AS A TRAIN AND USE THEREOF**

(30) Priority: 16.09.2022 RS P20220869
(71) Applicant: CAM Engineering doo Novi Sad, 21000 Novi Sad (RS); Faculty of Mechanical Engineering University of Nis, 18106 Nis (RS); Mihajlo Pupin Institute doo, 11060 Belgrade (RS)
(72) Inventor: Banic, Milan, Nis (RS); Stamenkovic, Dusan, Nis (RS); Miltenovic, Aleksandar, Nis (RS); Simonovic, Milos, Nis (RS); Stankovski, Stevan, Novi Sad (RS); Ostojic, Gordana, Novi Sad (RS); Rajic, Milena, Nis (RS); Peric, Marko, Aleksinac (RS); Tomic, Misa, Nis (RS); Pavlovic, Vukasin, Nis (RS); Rangelov, Damjan, Dimitrovgrad (RS); Nikolic, Vlastimir, Nis (RS); Rodic, Aleksandar, Belgrade (RS); Sumarac, Jovan, Belgrade (RS); Kljajic, Jelena, Belgrade (RS)
(74) Representative: Pribic, Jelena

(57) **Abstract**

The technical solution of the present invention belongs to the area of vehicle undercarriage inspection systems, such as train undercarriage inspection systems, utilizing automated visual inspection. Accordingly, the present invention solves the problem with an autonomous system for vehicle undercarriage inspection, which can be performed directly from under the vehicle, while it is in regular service. Specifically, based on at least one obtained digital image of an undercarriage, an actual position of the optical means for obtaining the image relative to the undercarriage is determined, as well as activation of the first moving means to move a movable device and thus optical means to a new position, based on the determined actual position.

## Description

### TECHNICAL FIELD OF THE INVENTION

The present invention relates to vehicle undercarriage inspection systems, such as train undercarriage inspection systems using automated visual inspection.

### BACKGROUND OF THE INVENTION

Safety legislation requires railway transport means, such as locomotives, including all passenger and freight locomotives, to be regularly inspected. No national exceptions to the inspection rules have been identified, meaning that each train composition must comply with this requirement. The challenge is to develop a safety inspection system capable to perform the inspection of locomotives and wagons while the train is in operation on the track, rather than in the railway depot, which is equipped with a channel under the track, where the railway vehicle must be positioned to be inspected. In this industry, visual inspection (VI) of the vehicle undercarriage is the norm to check the correctness of rolling stock, braking systems, and other devices and assemblies as stipulated by the railway regulations. Visual inspection of the undercarriage is usually performed every week; for stock that has not been used for more than five days, before reuse, and in case of suspected defects. Without proper visual inspection of the undercarriage, locomotives should not operate. In addition, if the operator needs to check the undercarriage, it is possible to perform an optional visual inspection of the undercarriage, which is not necessarily related to railway regulations.

Currently, visual inspection requires the train to be taken out of service and transferred to a static inspection pit. The associated 'downtime' and visual inspection costs, including energy consumption, usage of the infrastructure routes, time and associated fees for inspection, and the time of a train driver led to reduced efficiency and a consequent reduction of revenues for train operators, as well as a need for higher redundancy in the system to meet requirements related to passenger and freight transport. Liberalization of the rail operator market has introduced many smaller, specialized players who have a limited number of locomotives and who cannot invest in their own inspection pit. Inspection services must be outsourced to certified providers which also may be distantly located, which further limits the effectiveness of an operator.

Autonomous undercarriage visual inspection brings numerous benefits: reduction of operating costs, reduction of maintenance costs, increase in capacity, increase in efficiency, improvement of personal safety, improvement of rail transport safety, and lower power consumption and railroad exploitation.

The prior art solutions provide some but not all of these advantages and only up to a certain extent. An example is Miltenovic, A., et al, "Technical solution of the under locomotives visual inspection system*",* which discloses a technical solution where a camera attached to a device moves on profiles back and forth allowing for longitudinal movement, and the device has motors that allow remote control positioning of the camera for transverse movement.

Ahuja, N, et al, "Machine Vision for Railroad Equipment Undercarriage Inspection Using Multi-Spectral Imaging*"* discloses a differentiated approach to undercarriage inspection using machine vision analysis. This approach uses multispectral imaging from cameras viewing the undercarriage from a below-the-track perspective.

US patent application US 10523858 discloses a system that allows the undercarriage of a train to be inspected without the need to stop for visual inspection. Also disclosed is cognitive positioning by the use of a camera controlled in real-time by software and data collected from a speed detection device.

Yet, all of these solutions fail to provide an enhanced movement of the inspection means relative to the element being inspected - the undercarriage - or to provide enhanced control of the inspection means and the monitoring of the inspected parts.

The present invention provides an autonomous undercarriage visual inspection of the vehicle which brings numerous benefits, including the ability to perform the inspection in any place, thus avoiding a transfer of the vehicle to be inspected to a specific inspection location. Further advantages thus include:
- Reduction of spent energy and operating costs, i.e., performing the visual inspection directly on track saves costs (track lease and electric power/fuel) for transporting the vehicle to the location having a visual inspection pit.
- Reduction of maintenance costs, which is achieved by a shift from preventivebased maintenance to condition-based and predictive-based maintenance.
- Increase of passengers and goods transport capacity.
- Performing the visual inspection directly on track - in the case of trains - saves route capacity for cargo and passenger transport, instead of occupation of routes for visual inspection-related vehicle transport.
- Increase of check efficiency, allowing to carry out the undercarriage visual inspection in cases when the vehicle, such as a train, is waiting for the next run as well as increase the efficiency of each locomotive.
- Safety improvement, eliminating safety risks related to visual inspection personnel that occur in a depot environment. For example, just in the UK, 1000 people are injured per year in the transport industry from slips, trips, and falls (source: HSE, 2017).
- Improved rail transport safety, enabling more frequent visual inspection (even daily) which is of crucial importance for the safe and reliable rolling stock operation, as it provides early identification of a defect that can cause damage. Furthermore, it will reduce the reliance on the subjective decisions of the operators providing the visual inspection.
- Lower power consumption and railroad exploitation, allowing a decrease in the use of railroads for visual inspection (decreased infrastructure wear) and decrease power consumption having a positive impact not only on the operator but also on the environment.

Accordingly, the present invention solves the problems outlined above with an usage of an autonomous system for vehicle undercarriage inspection, which can be performed directly from under the vehicle, while it is in regular service during the short breaks.

### SUMMARY OF THE INVENTION

The present disclosure includes a system for automated visual inspection of an undercarriage of a vehicle, such as a train.

The system comprises a movable device in turn comprising:
- optical means configured to obtain digital images of the undercarriage of the vehicle,
- first moving means for moving the movable device along a direction substantially parallel with a longitudinal direction of the undercarriage, such first moving means being configured to move the movable device and thus the optical means relative to the undercarriage,
the system further comprises control means configured to, based on at least one obtained digital image, determine a condition of the working correctness of the undercarriage part, wherein the control means are further configured to, based on at least one obtained digital image of the undercarriage, determine an actual position of the optical means relative to the undercarriage, and further, based on the determined actual position, actuate said first moving means to move the movable device and also the optical means to a new position.

The technical solution according to the present invention provides an improved movement of the device and, of the optical means, enabling the complete movability of the movable device, irrespective of the position of the undercarriage elements or parts being inspected. This makes the visual inspection independent from specific inspection centers in which inspection devices would only move along predefined routes. The present invention thus allows performing the predictive maintenance of vehicles such as trains, with a high degree of freedom of capturing digital images (and, again, without the need to transfer the vehicle to an inspection depot, equipped for performing the visual inspection).

The present disclosure includes the use of the system for determining the operating condition of parts of an undercarriage of a vehicle, such as a train, as well as identifying defects thereof.

The present disclosure includes a method for automated visual inspection of an undercarriage of a vehicle, such as a train.

The method according to the present invention comprises the steps:
obtaining at least one digital image of the undercarriage of the vehicle with optical means,
determining an actual position of the optical means relative to the undercarriage, based on at least one obtained digital image of the undercarriage,
moving the optical means to a new position based on the determined actual position,
obtaining at least one digital image of the undercarriage of the vehicle with optical means
determining an operating condition of the part of the undercarriage based on the obtained digital image and by comparison with the corresponding image from the database,

The method according to the present invention may be implemented by the system of the present invention.

### BRIEF DESCRIPTION OF DRAWINGS

Figure 1 represents an external, side view of an embodiment of the movable device of the present disclosure.
Figure 2 represents a side view of an embodiment of a part of the movable device of the present disclosure, particularly a support structure.

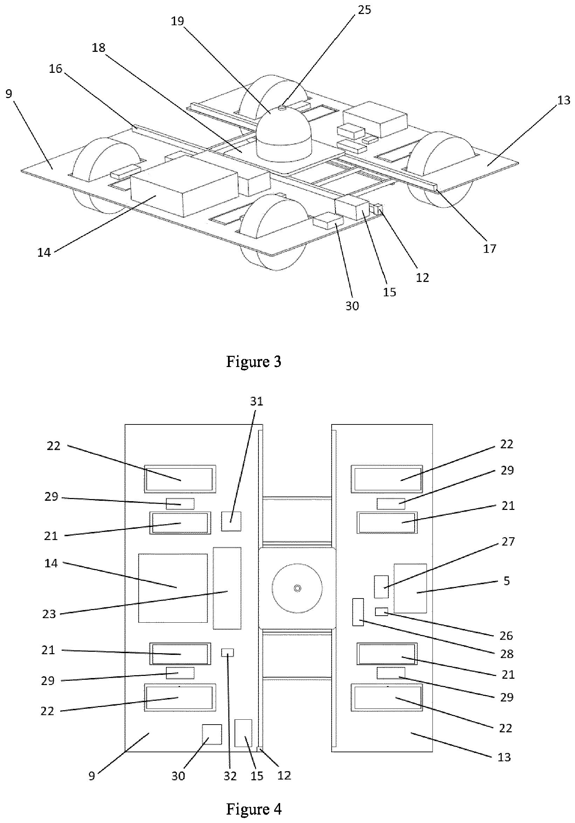

Figure 3 represents a side view of the embodiment of the movable device of Figure 1, in which the shields have been removed, thereby showing the inside of the device.
Figure 4 represents the embodiment of the movable device of Figure 3, from above.
Figure 5 - represents the embodiment of the part of Figure 2, from above.
Figure 6 - represents the embodiment of the movable device of Figure 1, from above and between tracks, highlighting the angle α between the track and the first direction of the movable device.
Figures 7a and 7b - represent the steps of the method according to the present invention for determining the condition of the part of the vehicle undercarriage.
Figure 8 - represents a possible positioning of 26 inspection positions (matrix provided below in the figure) associated with a train of a particular type (provided above), to be inspected.
Figure 9 - represents the movement of the optical means through different moving means: first moving means, second moving means, pan, tilt and zoom (which may be digital).

### DETAILED DESCRIPTION

According to the present invention, control means may efficiently be configured to determine the condition of the part of the undercarriage based on at least one obtained digital image through:
identification of the part of the undercarriage based on the obtained digital image,
comparison of one or more features of that part with one or more predefined features,
determination of the operating condition of the undercarriage part based on the comparison.

Based on at least one obtained digital image of the undercarriage, the control means may be further configured to determine an actual position of the optical means relative to the undercarriage through:
identification of the part or a section of the undercarriage based on the obtained digital image,
comparison of one or more features of that part or section with one or more predefined features,
determination of the distance of the optical means from one or more elements that have been imaged, thus obtaining the actual position.

One or more features of a part or section may comprise specific inspection positions defined in an undercarriage, which the control means can recognize. Thus, the present invention provides an entirely autonomous and movable technical solution.

The direction deflected by an angle α from the rail direction defines a first direction. The movable device may further comprise second moving means for moving the optical means along a second direction, the second direction being substantially or approximately perpendicular to the first direction and within a plane which is, when the movable device is below an undercarriage, substantially parallel to the undercarriage. According to the invention, the optical means may be independently movable along the second direction relative to a referential position of the movable device. Thus, the second moving means provide an additional degree of freedom, by moving the optical means along the second direction, Therefore, the visual inspection abilities of the system are improved, particularly in a situation in which the movable device is provided on the ground.

In one aspect, the control means may be further configured to actuate the second moving means to move the optical means along a second direction to a new position based on the determined actual position of the optical means. This aspect of the present invention further allows combining the visual inspection and moving abilities of the movable device, thereby resulting in a technical solution of the present invention which allows the movement and visualization in different directions and with an additional degree of freedom.

In one aspect, the vehicle may be a train, wherein:
the first direction is substantially aligned with a longitudinal direction of the undercarriage, wherein the first direction forms an angle α with said longitudinal direction, and
the movable device further comprises distance sensing means which are, when the movable device is provided between two rails on which the train lays, configured to determine at least two distances between two points of the movable device, a line connecting the two points being parallel to the first direction, and at least two points of the same rail, each being positioned along a direction perpendicular to the first direction and further, based on the at least two determined distances, configured to determine said angle α.

This aspect provides an improved way to autonomously correct the alignment of the movable device with the train, when said movable device is positioned between two rails and potentially misaligned with the undercarriage of the train. The distance sensing means may comprise distance sensors that determine the distance between a point of the movable device and a point of the rail, such two points being part of a line that is perpendicular to the first direction, i.e., the direction with which the movable device is aligned. The movable device may comprise more than two distance sensors, such as three or more distance sensors. The movable device may comprise pairs of distance sensors, each of the sensors of the pair of sensors being mutually opposite provided on a side of the movable device potentially facing a rail. The movable device may thereby determine the distance of several points on both sides, relative to both rails and thereby more accurately determine the angle α.

The first moving means may be further configured to move the movable device in one or more directions different from the first direction. Said control means may be further configured to, based on the determined angle α, actuate the first moving means for movement of the device in one or more directions that are different from the first direction such that the angle α is reduced and/or nullified. This allows correcting the trajectory or position of the movable device relative to the longitudinal direction of a vehicle being inspected, reducing or nullifying the angle α between the first direction and the longitudinal direction.

The first moving means may comprise wheels and control means may be further configured to, based on the angle and the number of revolutions of the wheels, move the device in one or more directions different from the first direction such that the angle α is reduced and/or nullified. The first moving means may comprise at least two pairs of oppositely positioned wheels, allowing better movement across the terrain. Each wheel may be a drive wheel, wherein each wheel is connected to a respective motor with a variable number of revolutions (variable-speed motor). Alternative combinations of movement are contemplated wherein:
- front or rear pair of wheels is drive pair of wheels, while the opposite pair of wheels are non-driven; each drive wheel is connected to a respective variable speed motor, while the non-driven wheels rotate freely around their axis.
- each of the wheels from side pairs of wheels (parallel to the first direction) is connected to a respective motor, the speed of which can be changed; the wheels are connected to the motor via a transmission mechanism that ensures that the side pair of wheels rotates at the same speed.

According to the present invention, the alternation of the motor revolution number of the first moving means, the alternation being controlled by the control means, realizes the movement (turning) of the device in the first direction.

Optical means, such as a digital camera is configured to obtain digital images of
the vehicle's undercarriage elements.

Based on the recognized position of the optical means, the optical means can be directed to the undercarriage element which is the subject of inspection, thus enabling a digital image recording which is further used for checking the condition of the undercarriage part.

The movable device may further comprise audio recording means associated with optical means. The combination of audio data obtained by the audio recording means and video data obtained by the optical means may result in a media stream with image and synchronized audio.

In one aspect of the present invention, the control means may be further configured to actuate the optical means, such as the digital camera, to rotate along pan and/or tilt axes to a new position based on the determined actual position of the optical means. This aspect provides an additional degree of operation freedom, allowing for better positioning and better capture of digital images, thus, a better inspection of the vehicle undercarriage.

The movable device may further comprise wireless communication means. The wireless communication means may be configured to remotely transmit and/or receive information. The wirelessly transmitted information may comprise at least one obtained digital image of the determined condition of the part and/or the determined actual position of the optical means, or other data. The other data may comprise, for instance, a report which comprises information about the condition of the part of the undercarriage. This aspect of the present invention allows transmitting of a stream remotely, when capturing a plurality of digital images forming a video, or already processed information, such as the determined condition of the part of the undercarriage.

The device according to the present invention may comprise control means.

Alternatively, the movable device comprises a local unit of control means while a remote unit of the controlled means is provided remotely from the movable device, the local and the remote units of the control means being in connection through the wireless communication means.

The system may further comprise at least one server, the at least one server being configured to receive and store the wirelessly transmitted information in real-time, the at least one server optionally defining cloud storage accessible in real-time.

The movable device may further comprise lighting means, the lighting means being configured to light a section of space provided adjacent to and above the movable device. The lighting means may comprise at least two lighting elements, each provided on an opposite side of the movable device. Each lighting element may comprise a set of aligned light sources, the alignment being parallel with the first direction, such that a whole side of the movable device can provide lighting. The lighting means may be configured to provide variable lighting intensity. This aspect allows the optical means to capture high-quality images regardless of light conditions during the inspection.

The system according to the present invention may comprise a movable device. The movable device may comprise optical means. In one aspect, the optical means can obtain at least one digital image of the undercarriage of the vehicle. In a further aspect, the optical means can obtain a plurality of digital images of the vehicle. The sequence of the plurality of digital images of the vehicle may form a digital video. When transmitted remotely, the digital video forms a data stream, which forms a live stream when sent in real time. Said live stream may be made accessible remotely when stored in one or more servers, such as cloud storage, which is accessible from any location, allowing access to the live stream.

The first moving means are configured to move the movable device at least along a direction substantially aligned with the longitudinal direction of the undercarriage, i.e., with the first direction.

In one aspect, the first direction and the longitudinal direction of the undercarriage may not be entirely aligned, thus forming an angle α.

The second direction is perpendicular to the first direction. Thus, in one aspect the second direction may not be entirely perpendicular to the longitudinal direction.

The correction of the alignment of the first direction with the longitudinal direction, through the determination of the angle α and consequent reduction or nullification of such angle, enables alignment of the first direction with the longitudinal direction making the second direction perpendicular to the longitudinal direction.

The control means may be configured to perform the determination of the condition of the part or the determination of the actual position through an algorithm able to compare predefined images associated with a particular condition and the images captured by the camera and, based on such comparison, determine the actual condition. The determination of the condition may comprise the identification of a defect, wherein the predefined images may comprise images of parts with particular, different types of defects and images of parts without defects, wherein each image has been categorized with a particular type of defect or with the information that no defect is present in the part of the image.

The control means may be configured with an algorithm that may be defined as artificial intelligence.

The algorithm and, thus, the control means, may be pre-trained with training data, the training data comprising images and respective categorizations.

The movement provided by the first moving means may be provided, as mentioned above, utilizing wheels, thus enabling a wholly movable technical solution along the ground.

The movement of the optical means provided by the second moving means may be provided utilizing two parallel guides connected to a platform being slidable along such guides, wherein the optical means are provided on the platform. This embodiment of the present invention allows the movement of the optical means along a direction defined by the parallel guides, guaranteeing that the second direction remains perpendicular to the first direction.

According to the present invention, the several movements the optical means can perform, such as the movement along the first direction, the second direction, or the pan, tilt, or zoom movements, provide a technical solution enabling the movement with an increased degree of freedom. The inspection and/or movement of the movable device may be performed through the identification of predefined inspection positions of the undercarriage being analyzed. Based on the indication of a specific type of vehicle to be inspected, the control means may be further configured to, select a predefined set of inspection positions associated with such a specific type of vehicle.

According to the present invention, the movable device may be manually remotely controlled, although being configured to operate autonomously.

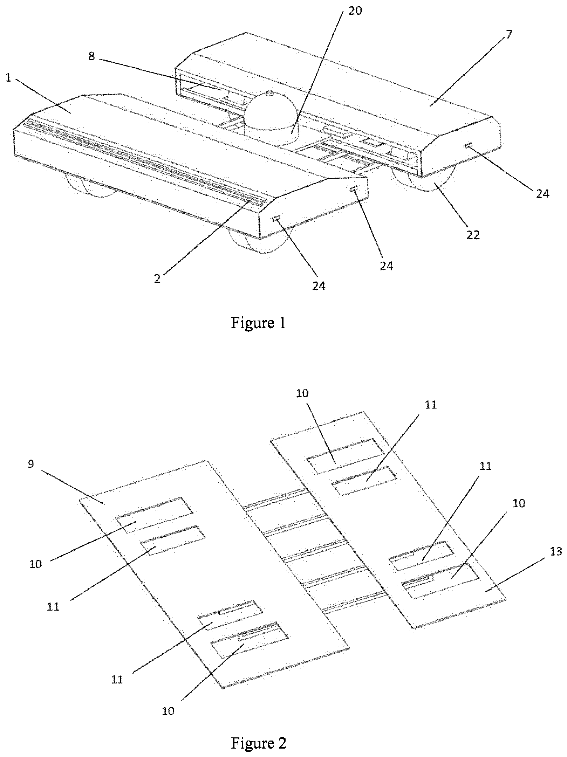

The system of the present invention comprises the movable device, represented in Figure 1. The movable device comprises optical means 19, such as a pan, tilt, zoom (PTZ) digital camera, second moving means 20, a power supply 23, the lighting means having light sources 2 and control means, i.e., a controller 14. The control means are provided in the movable device. The system according to the present invention may also comprise movable device distance sensors 24 which enable the determination of the angle α. The system may comprise wheels 22. The movable device may be provided with a larger shield 1 and a smaller shield 7 which, as will be described, enclose respective base plates.

Figure 2 shows a larger base plate 9, a smaller base plate 13, and a frame 6 of the movable device, which provide a support structure for several elements, such as the means 21 for actuating the wheels, which are comprised in the first moving means.

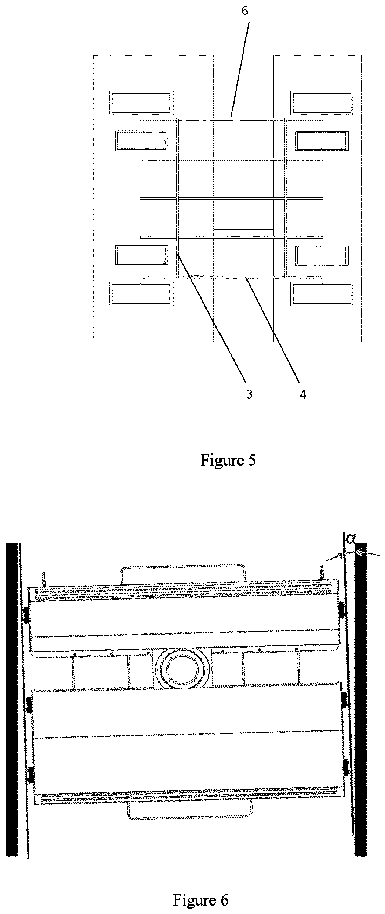

The base of frame 6 may comprise five longitudinal profiles 4 and two transverse sections 3 of square or rectangular cross-section, as shown in Figure 5. The longitudinal profile 4 may be inseparably connected to the transverse profiles 3.

The larger base plate 9 and the smaller base plate 13 may be detachably connected to frame 6.

The means 21 for actuating the wheels are arranged in smaller holes 11 of the larger base plate 9 and the smaller base plate 13. The means 21 for actuating the wheels are connected to wheels 22 by a detachable connection. On a smaller base plate 13, an inertial measuring unit 27 is placed, which measures angular velocity, linear acceleration, and strength of the magnetic field. This allows us to better determine the orientation of the movable device and its speed in real time.

The movable device according to the present invention is covered and connected to a thin shield, which comprises a larger shield 1 and a smaller shield 7, as previously referred. The function of the larger shield 1 and the smaller shield 7 is to increase rigidity and protect the interior 8 of the movable device. The larger shield 1 is detachably connected to a larger base plate 9, and the smaller shield 7 is detachably connected to the smaller base plate 13. On the larger shield 1 and the smaller shield 7, the movable device distance sensors 24 are mounted, which send data about the distance of the movable device from the rails.

The optical means 19, such as a camera, collect images that are transferred to software that performs recognition of the position and the operating conditions. Wireless communication means 5 may communicate through 3G / 4G / 5G communication standards or other local area or world area wireless communication protocols, and send data to a remote location for storage.

Also, wireless communication means 5 provides access to optical means 19 from a remote location and monitoring in real-time the condition of the vehicle.

Optical means distance sensors 25 can be mounted on the movable device, sending information on the distance of the device from the environment, such as the distance from rails.

The second moving means 20 may comprise parallel guides 16, 17 (guiding system), a carrier plate 18 connected to guides 16, 17, and an encoder 12 through which the positions of the carrier plate 18 and a drive device 15 are determined.

The guides 16, 17 are connected to the larger base plate 9 and the smaller base plate 13.

The optical means 19 may be detachably connected to the carrier plate 18.

The drive device 15 moves the carrier plate 18, and thus the optical means 19, via the guides 16, 17. The second moving means 20 are configured to translationally move the optical means 19 from a "left" endpoint to a "right" endpoint (for instance, according to the view of Figure 2), i.e., from one side to the other side of the vehicle being inspected, and vice versa.

The power supply may comprise a direct current source 23 and adjustment electronics 32 for adjustment of the voltage. Adjustment electronics 32 adjusts the voltage from the direct current source 23 to individual components that require the power supply.

The lighting means may comprise several light sources 2 arranged on the shield of the movable device and detachably connected to the movable device. The light sources 2 are electrically connected via the electronics of a lighting intensity controller 26 to the adjustment electronics 32 through which the light sources 2 are powered. The light intensity is adjusted via a lighting intensity controller 26.

The control means 14, i.e., the controller may include hardware and respective software. The hardware may comprise a control mean 14, which has the function of a basic controller, and several additional controllers, such as a controller 30 configured to control the second moving means 20 and a controller 31 configured to control the lower levels of the system that require control, such as the means 21 for actuating the wheels, the wheels 22 and the second moving means 20.

Software may comprise software implementation and implementation of intelligent control algorithms as previously described, including a user interface as well as the ability to position and check the operating conditions.

The control means 14 may include two basic subsystems for lower-level control, namely:
- means 21 for actuating the wheels configured to control the movement of the wheels 22;
- second moving means 20.

The means 21 for actuating the wheels control the motion of the wheels 22 and are associated with the controller 31 and the driver 29 of the means for actuating the wheels. Controller 31 for controlling the means 21 for actuating the wheels generates control signals and sends them to the driver 29 of the means for actuating the wheels. The driver 29 of the means for actuating the wheels connects with the means 21 for actuating the wheels that controls the speed of the wheel 22. The control signals are generated based on the control algorithms, that the controller 31 for controlling the means 21 for actuating the wheels receives from the control means 14.

The second moving means 20 are controlled via the controller 30 for controlling the second moving means and a driver 28 of the second moving means. The controller 30 for controlling the second moving means generates control signals and sends them to the driver 28 of the second moving means. The driver 28 of the second moving means is connected to the drive device 15 and together with the guides 16, 17 controls the lateral movement of the carrier plate 18, and thus the optical means 19. Using the data obtained from the encoder 12, the algorithm determines the current position of the carrier plate 18. Control signals are generated based on the control algorithms, which controller 30 for controlling the second moving means for controlling the drive device 15 receives from controller 14.

The present invention provides the movable device capable to move on uneven terrain due to all-wheel drive, where each wheel 22 can be controlled separately. Each wheel 22 may have wide tires that achieve a high coefficient of friction so that slipping is minimized.

The movable device is equipped with distance sensors 24 positioned on its sides, wherein the distance sensors 24 measure the distance from the side edge of the movable device to a rail. Figure 1 shows the movable device, and the distance sensors 24 that measure the distance. Three distance sensors 24 for measuring the distance of the movable device are arranged on each side of the movable device. Based on the measured distances with three distance sensors 24 on one side of the movable device from the rail, it is possible to determine the direction of the imaginary line that is parallel to the side of the movable device and passes through the distance sensors 24, wherein the imaginary line is used to estimate the angle between the direction of rails and movable device - angle α as provided in Figure 6. Based on this angle α, it is possible to calculate the required difference in the number of revolutions of the wheels 22 on both sides of the movable device to correct the first direction of the movable device relative to the longitudinal direction of the train, i.e., the direction of the rails and to provide equidistant distance between the movable device and the rails.

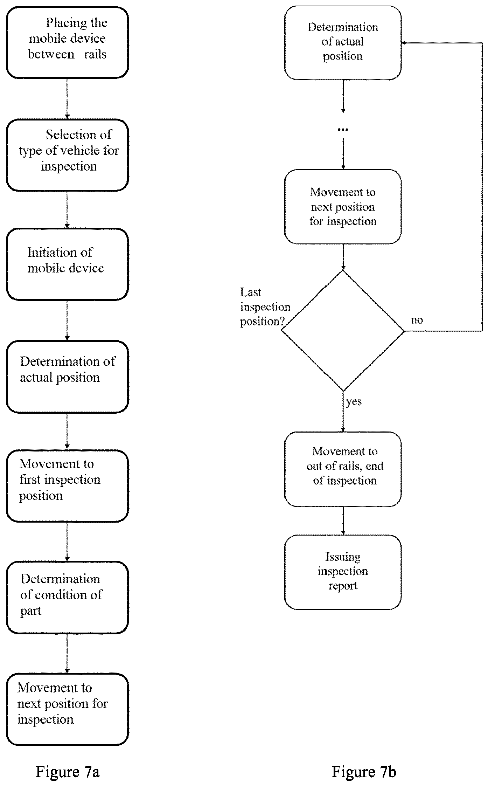

A specific block diagram of the method is provided in Figures 7a and 7b. A movable device may be placed between rails below the undercarriage of a stopped train. The train is disconnected from the power network. The movable device is turned on and the type of train being inspected is selected. The digital camera on the movable device captures images and determines the actual position (as referred to, based on artificial intelligence by comparing images from the camera with images from the database and additionally by using the data from a distance sensor on the camera). After confirming the actual or starting position, an autonomous inspection is started. In case the starting position is not determined, a message is sent to an operator.

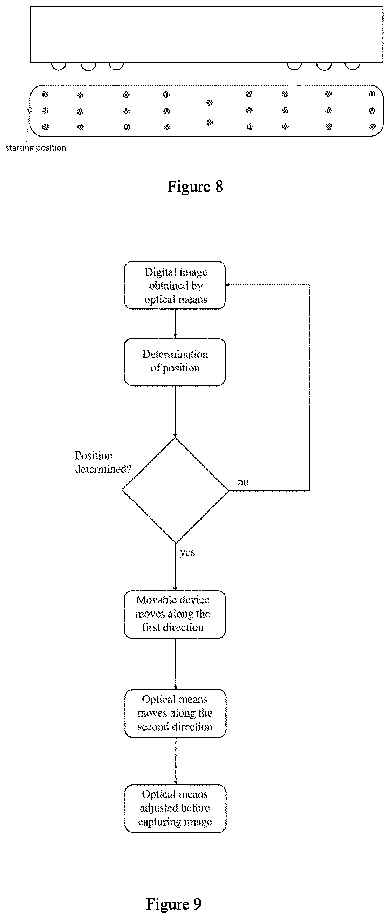

As represented in Figure 8, the autonomous inspection may be performed by checking a determined number of parts, preferably 26 parts, associated with the undercarriage of a specific type of train, whereby it is necessary to move the movable device to a corresponding number of previously known positions depending on the type of the vehicle and by laterally moving the camera to the corresponding positions, an overview of all positions, preferably 26 positions, is achieved. This means that the distance between the first position and the starting position is for example 350 mm. By measuring the number of revolutions of the wheels and by knowing the diameters of the wheels, as well as the data obtained from an inertial sensor, the distance that the movable device needs to cover is determined.

According to the present invention, checking and possible correction is performed using the data from a camera's distance sensor that determines the distances between the camera and the environment. After arriving at the next inspection position, the position is checked via the inertial sensor, the distance sensor, and the images provided by the camera. If the cognitive position of the movable device is confirmed, then the movable device starts with the inspection of the first part or assembly. If the next cognitive position is not confirmed, then the correction of the position of the movable device is performed.

When the movable device, according to the present invention, is in the position from which the inspection can be performed, the process of determining the operating condition and possibly recognizing the defect is started (Figure 9). The movable device control means adjust the appropriate angles on the camera to enable the camera to browse the part or assembly for inspection, after which an image (or images) is taken. The recorded image is compared with the images in the database through the use of artificial intelligence, which determines the condition of the part.

Based on the image, the condition of the part or assembly is monitored, and in case a defect is identified, a message is immediately sent to the transport operator. If no defect is noticed, the image (or images) is merely stored in the database, which enables monitoring of the operating condition of the part.

Subsequently, the movable device moves to the next position where it is necessary to perform the inspection. These cycles are repeated until the last position is reached. Thereafter, the inspection is completed and the movable device exits under the inspected railway vehicle. A final inspection report is generated and forwarded to the transport operator/persons in charge of inspection and supervision.

The system, the movable device, the control means, the wireless communication means, and/or elements thereof comprise components of a technical solution according to the present invention, described method, and use thereof, whether through hardware components (such as memory and/or processor), software or any combination thereof.

In particular, the control means may comprise one or more microcontrollers, with the capability of receiving external data through inputs and providing actuation of outputs, based on predefined configured rules and/or programming.

A device for use with the system, the mobile device, or the control means, such as a pre-recorded storage device or another similar computer-readable medium, including program instructions recorded on it, or a computer data signal carrying readable program instructions may facilitate the implementation of the methods described herein. It is understood that such apparatus, articles of manufacture, and computer data signals are also within the scope of the present disclosure.

A "computer-readable medium" means any medium that can store instructions for use or execution by a computer or other computing device, including read-only memory (ROM), erasable programmable read-only memory (EPROM), or flash memory, random access memory (RAM), a portable floppy disk, a hard disc drive (HDD), SSD solid-state storage device (for example, NAND flash or synchronous dynamic RAM (SDRAM)), and/or an optical disc such as a Compact Disc (CD), Digital Versatile Disc (DVD) or Blu-Ray ^{™} Disc.

As will be clear to one skilled in the art, the present invention should not be limited to the embodiments described herein, and a number of changes are possible which remain within the scope of the present invention.

Of course, the preferred embodiments shown above are combinable, in different possible forms, being herein avoided the repetition of all such combinations.

## Claims

1. A system for automated visual inspection of an undercarriage of a vehicle **characterized in that** the system comprises a movable device in turn comprising:
optical means able to obtain at least one digital image of the undercarriage of the vehicle,
first moving means for moving the movable device at least along a direction substantially aligned with a longitudinal direction of the undercarriage, such first moving means being configured to move the movable device and thus the optical means relative to the undercarriage,
the system further comprises control means configured to, determine, based on at least one obtained digital image, a condition of the part of the undercarriage,
wherein the control means are further configured to determine, based on at least one obtained digital image of the undercarriage, an actual position of the optical means relative to the undercarriage, and actuate said first moving means to move the movable device and thus the optical means to a new position based on the determined actual position.

2. The system according to the previous claim 1 wherein the control means are further configured to determine the condition of the part of the undercarriage based on the digital image through:
identification of a part of the undercarriage based on the digital image,
comparison of one or more features of that part with one or more predefined features, and
determination of the condition of the part of the undercarriage based on the comparison.

3. The system according to any of the preceding claims wherein the control means are further configured to determine, based on at least one obtained digital image of the undercarriage, an actual position of the optical means relative to the undercarriage through:
identification of the part or the section of the undercarriage based on the digital image,
comparison of one or more features of that part or section with one or more predefined features,
determination of the actual position based on the comparison.

4. The system according to any of the preceding claims wherein the direction longitudinally along the undercarriage defines a first direction, the movable device further comprising second moving means for moving the optical means along a second direction, such second direction being substantially or approximately perpendicular to the first direction and provided within a plane which, when the movable device is below the undercarriage, is substantially parallel to the undercarriage, the optical means being independently movable along the second direction relative to a referential position of the movable device.

5. The system according to the previous claim wherein the control means are further configured to actuate the second moving means to move the optical means along a second direction to a new position based on the determined actual position of the optical means.

6. The system according to any of the preceding claims wherein the vehicle is a train, and the first direction is substantially aligned with a longitudinal direction of the undercarriage, thereby the first direction forming an angle α with said longitudinal direction, and
the movable device further comprises distance sensing means able to, when the movable device is provided between two rails on which the train lays, determine at least two distances between two points of the movable device, wherein a line connecting the two points is parallel to the first direction, and at least two points of a same rail, each being positioned along a direction perpendicular to the first direction and further determine said angle α based on the at least two determined distances.

7. The system according to the previous claim wherein the first moving means are further configured to move the movable device in one or more directions different from the first direction, and the control means are further configured to, based on the determined angle α, actuate the first moving means to move the device in one or more directions different from the first direction such that the angle α is reduced and/or nullified.

8. The system according to the previous claim wherein the first moving means comprise wheels and control means are further configured to, based on the angle and the number of revolutions of the wheels, move the device in one or more directions different from the first direction such that the angle α is reduced and/or nullified.

9. The system according to any of the preceding claims wherein the optical means comprise a digital camera able to pan and tilt, optionally a pan-tilt-zoom digital camera.

10. The system according to the previous claim wherein the control means are further configured to actuate the digital camera to rotate along pan and/or tilt axes to a new position based on the determined actual position of the optical means.

11. The system according to any of the preceding claims wherein the movable device further comprises wireless communication means, the wireless communication means being configured to remotely transmit information, the wirelessly transmitted information comprising at least one obtained digital image, of the determined condition of the part and/or the determined actual position of the optical means, optionally the control means being comprised by the movable device, optionally the control means comprising a local unit and a remote unit provided remotely from the movable device, the local and the remote units of the control means being in connection through the wireless communication means.

12. The system according to any of the preceding claims, wherein the system comprises at least one server, the at least one server being configured to receive and store the wirelessly transmitted information in real-time, the at least one server optionally defining cloud storage accessible in real-time.

13. A method for automated visual inspection of a part of an undercarriage of a vehicle, implemented by the system according to claims 1-12, the method comprising the steps of:
obtaining at least one digital image of the undercarriage of the vehicle utilizing optical means,
based on the obtained digital image, determining the condition of the part of the vehicle undercarriage,
based on at least one obtained digital image of the vehicle undercarriage, determining an actual position of the optical means relative to the vehicle undercarriage,
moving the optical means to a new position based on the determined actual position.

14. Use of the system of any of the claims 1-12 for determining a condition of a part of an undercarriage of a vehicle, optionally a train.
